# EUROPÄISCHE PATENTSCHRIFT

(11) **EP 1 516 767 B1**
(45) Veröffentlichungstag und Bekanntmachung des Hinweises auf die Patenterteilung: **09.07.2008**
(21) Anmeldenummer: 04104110.4
(22) Anmeldetag: 26.08.2004
(51) Int. Cl.: B60W 10/04, B60W 10/18

(54) **Vorrichtung und Verfahren zur Regelung der Geschwindigkeit eines Fahrzeugs beim Rangieren/Einparken des Fahrzeugs**
Method and device for controlling the speed of a vehicle, during manoeuvring and/or parking
Procédé et dispositif de régulation de la vitesse d'un véhicule, au cours de manoeuvre et/ou de stationnement du véhicule

(30) Priorität: 18.09.2003 DE 10343174
(43) Veröffentlichungstag der Anmeldung: 23.03.2005
(73) Patentinhaber: ROBERT BOSCH GMBH, 70442 Stuttgart (DE)
(72) Erfinder: Uhler, Werner, 76646, Bruchsal (DE); Schmid, Dirk, 75397, Simmozheim (DE)

(56) Entgegenhaltungen:
- EP-A- 0 305 907
- US-A- 4 931 930
- US-A- 5 572 484
- US-A- 6 006 144
- US-A1- 2003 167 113
- US-B1- 6 580 385

## Beschreibung

### STAND DER TECHNIK

Die vorliegende Erfindung beschreibt eine Vorrichtung und ein Verfahren zur Regelung der Geschwindigkeit eines Fahrzeugs beim Rangieren/Einparken des Fahrzeugs, insbesondere für Kraftfahrzeuge, wie Personenkraftwagen beim manuellen Rangieren/Einparken.

Einparkhilfen in Form von Abstandswarnen mit akustischer oder optischer Wameinrichtung sind bekannt und werden bereits in heutigen Pkws eingesetzt. Dabei handelt es sich in aller Regel um Systeme, welche mit Ultraschallsensoren in der Heckund/oder Frontschürze des Pkws den Abstand zu einem Objekt in einem vorbestimmten Erfassungsbereich messen. Dieses Parkpilotsystem zeigt beispielsweise über eine optische Balkenanzeige oder ein akustisches Tonsignal den Abstand zu dem Objekt im Erfassungsbereich in codierter Form an.

Aus der US-Patentschrift US 6,006,144 von Takahashi et al. ist darüber hinaus eine Antriebskraft-Steuervorrichtung zum Bewegen eines Fahrzeugs um eine kleine gewünschte Distanz zum Parken des Fahrzeugs bekannt, wobei das Fahrzeug mit einem Drosselklappenbetätiger versehen ist und die Antriebskraft-Steuervorrichtung aufweist: Eine Eingabeeinrichtung zum Eingeben eines Befehls zum Eintreten in einen Automatikmodus des Fahrzeugs von einem nicht automatischen, fahrerbetriebenen Modus, um das Fahrzeug die kleine gewünschte Distanz zu bewegen, wobei der Befehl zur Bewegung das Eintreten in den Automatikmodus bereitstellt, wenn der Bewegungsbefehl eingegeben wird, nachdem das Fahrzeug in dem Nicht-Automatik-Modus vollständig gestoppt ist; eine Drosselklappen-Steuereinrichtung zum Eingeben eines Drosselklappen-Öffnungswinkels an den Drosselklappenbetätiger; eine Detektionseinrichtung zum Detektieren einer gerade bewegten Distanz des Fahrzeugs; eine Hindernis-Detektionseinrichtung zum Detektieren einer Distanz zwischen dem Fahrzeug und einem Hindernis, welches nahe dem Fahrzeug auftritt; eine Vergleichseinrichtung zum Vergleichen des Detektionssignals der Hindernis-Detektionseinrichtung und der kleinen gewünschten Distanz; eine Bewegungsdistanz-Veränderungseinrichtung zum Verkleinern der kleinen gewünschten Distanz um eine vorbestimmte Größe, wenn die Vergleichseinrichtung entscheidet, dass das Hindernis innerhalb der kleinen gewünschten Distanz liegt; und eine Bremskraft-Erzeugungseinrichtung zum Stoppen des Fahrzeugs, wenn die aktuell bewegte Distanz gleich der kleinen gewünschten Distanz in einem ersten Fall wird, in welchem kein Hindernis innerhalb des kleinen gewünschten Bereichs liegt, und zum Stoppen des Fahrzeugs, wenn die gerade bewegte Distanz gleich der kleinen bewegten Distanz verringert um die vorbestimmte Größe in einem zweiten Fall wird, in welchem ein Hindernis innerhalb der kleinen gewünschten Distanz liegt.

Gemäß der US-Patentschrift wird somit ein System beschrieben, welches eine automatisierte Annäherung an ein Objekt beim Einparken weitgehend ohne Einflussnahmemöglichkeiten des Fahrers ermöglicht.

Aus der DE 101 18 903 A1 ist ein Mehrzweck-Fahrerassistenzsystem mit wenigstens einem Sensor zum Erfassen der Entfernung des Fahrzeugs von einem Objekt bekannt. Hierzu ist eine Steuereinheit vorgesehen, die zwischen einer Einparkhilfe-Betriebsart, einer Pre-Crash-Betriebsart und einer Geschwindigkeitsregelungs-Betriebsart umschaltbar ist. Nähert sich das Fahrzeug in einer Einpark-Betriebsart einem Objekt, so wird zunächst eine Warnung an einen Fahrer ausgegeben. Nähert er sich dem Objekt weiter an, wird das Fahrzeug gegebenenfalls automatisch gebremst.

Eine Geschwindigkeitsregelungs-Betriebsart ist dann möglich, wenn kein sicherheitsrelevantes Objekt erfasst wird.

### VORTEILE DER ERFINDUNG

Die erfindungsgemäße Vorrichtung zur Regelung der Geschwindigkeit eines Fahrzeugs beim Rangieren/Einparken des Fahrzeugs mit den Merkmalen des Anspruchs 1 und das entsprechende Verfahren zur Regelung der Geschwindigkeit eines Fahrzeugs beim Rangieren/Einparken des Fahrzeugs mit den Merkmalen des Anspruchs 6 weist gegenüber dem bekannten Lösungsansatz den Vorteil auf, dass der Abbremsvorgang beim Ein-/Ausparken bzw. Rangieren durch einen Geschwindigkeitsregler kontrolliert wird, sobald ein Objekt im Erfassungsbereich einer Detektionseinrichtung identifiziert wird. Führungsgrößen sind sowohl die Fahrpedalstellung als auch der momentan gemessene Abstand zum nächstliegenden Objekt bzw. Hindernis in Bewegungsrichtung des Fahrzeugs. Das Fahrzeug wird vorteilhaft automatisch, sicher und komfortabel, d.h. sanft, in einem vorgegebenen kleinen Sicherheitsabstand von detektierten Objekten angehalten.

Außerdem behält der Fahrer jederzeit die Kontrolle über das Fahrzeug, d.h. er kann die Fahrgeschwindigkeit weitgehend frei wählen, fein dosieren und das Fahrzeug jederzeit sofort anhalten. Zusätzlich wird dem Fahrer vorteilhaft das Gefühl vermittelt, die Verantwortung für das Fahrmanöver innezuhaben und nicht dem System trotz automatischer Funktion ohne Einflussnahmemöglichkeit ausgeliefert zu sein. Der Fahrer ist weiterhin für die Sicherheit beim Rangieren allein verantwortlich. Wesentliches Merkmal dabei ist, dass sich das Fahrzeug nur dann bewegt, wenn der Fahrer das Fahrpedal betätigt. Nimmt er den Fuß vom Pedal bzw. belässt er eine entsprechende Betätigungseinrichtung in Nullstellung, so bleibt das Fahrzeug stehen. Schließlich wird einem Fahrer das Vorhandensein detektierter Objekte unabhängig von gegebenenfalls vorhandenen Anzeigen (akustisch oder optisch) der Einparkhilfe auf vorteilhafte Weise spürbar vermittelt.

Die der vorliegenden Erfindung zugrunde liegende Idee besteht im Wesentlichen darin, dass sich die Fahrgeschwindigkeit beim Ein-/Ausparken und Rangieren automatisch einer Hindernissituation und dem Fahrerwunsch anpasst. Der Fahrer kann die Funktion bei Bedarf aktivieren und sie in einem definierten Geschwindigkeitsbereich zwischen beispielsweise 0 und 10 km/h je Fahrtrichtung nutzen. Der Zweck dieser Einparkbremsfunktion oder auch "Parkstopp" ist die Entlastung des Fahrers durch eine weitgehend automatische Geschwindigkeits- und damit Abstandsregelung und sicheres Abbremsen des Fahrzeugs vor detektierten Objekten. Ein rein anzeigendes Warnsystem wird so zu einem eingreifenden Komfortsystem erweitert.

Mit anderen Worten wird eine Vorrichtung zur Regelung der Geschwindigkeit eines Fahrzeugs beim Rangieren/Einparken des Fahrzeugs bereitgestellt mit: Einer Detektionseinrichtung zum Detektieren von Objekten im Umfeld des Fahrzeugs und zum Erfassen des Abstandes zu einem in Bewegungsrichtung des Fahrzeugs nächstliegenden Objekt; einer Regeleinrichtung zur Regelung der Geschwindigkeit des Fahrzeugs in Abhängigkeit von der Stellung einer Betätigungseinrichtung und vom Abstand zu dem in Bewegungsrichtung des Fahrzeugs nächstliegenden Objekt gemäß einer vorbestimmten Geschwindigkeits-/Abstandsrelation; und einer Steuereinrichtung zum automatischen Steuern einer Bremseinrichtung und einer Antriebseinrichtung des Fahrzeugs in Abhängigkeit von einem entsprechenden Ausgangssignal der Regeleinrichtung.

In den Unteransprüchen finden sich vorteilhafte Weiterbildungen und Verbesserungen der in Anspruch 1 angegebenen Vorrichtung und des in Anspruch 6 angegebenen Verfahrens zur Regelung der Geschwindigkeit eines Fahrzeugs beim Rangieren/Einparken des Fahrzeugs.

Gemäß einer bevorzugten Weiterbildung weist die Detektionseinrichtung Ultraschallsensoren und/oder Radarsensoren und/oder Lidarsensoren auf, welche vorzugsweise an der Fahrzeugfront und/oder dem Fahrzeugheck vorgesehen sind. Dies birgt den Vorteil einer Umfelddetektion mit bekannten Sensoren im Bereich vor und hinter dem Fahrzeug.

Gemäß einer weiteren bevorzugten Weiterbildung ist eine Einschalteinrichtung zur Aktivierung / Deaktivierung der Regeleinrichtung vorgesehen, welche manuell und/oder semi-automatisch beim manuellen Einlegen einer Rückwärtsfahrstufe der Antriebseinrichtung aktivierbar ist. Die Einparkbremsfunktion lässt sich somit auf einfache Weise aktivieren und deaktivieren.

Gemäß einer weiteren bevorzugten Weiterbildung weist die Betätigungseinrichtung ein Fahrpedal oder ein Gaspedal, vorzugsweise jeweils mit Stellungswinkelerfassung, auf. Darin liegt der Vorteil begründet, mit dem im Fahrzeug ohnehin vorhandenen Gaspedal gleichzeitig die Geschwindigkeitsvorgabe beim Rangieren geben zu können.

Gemäß einer weiteren bevorzugten Weiterbildung ist eine Anzeigeeinrichtung zur visuellen und/oder akustischen Anzeige des Abstands zum in Bewegungsrichtung des Fahrzeugs nächstliegenden Objekt vorgesehen. Somit wird dem Fahrer zusätzlich zum spürbaren Abbremsen des Fahrzeugs beim Annäherung an ein Hindernis bzw. ein Objekt der Abstand in codierter Form mitgeteilt.

Gemäß einer weiteren bevorzugten Weiterbildung verändert eine Änderung der Stellung, vorzugsweise des Winkels, der Betätigungseinrichtung die Sollgeschwindigkeit des Fahrzeugs, vorzugsweise im Bereich zwischen 0 und 10 km/h, nach Aktivierung der Regeleinrichtung beim Rangieren bis zu einem zweiten vorbestimmten Abstand zu dem in Bewegungsrichtung nächsten Objekt, wobei der zweite vorbestimmte Abstand größer oder gleich dem ersten vorbestimmten Abstand ist. Dies birgt den Vorteil einer einfachen Sollgeschwindigkeitsvorgabe bei aktivierter Einpark- bzw. Rangierbremsfunktion.

Gemäß einer weiteren bevorzugten Weiterbildung verringert ein Ändern der Stellung, vorzugsweise des Winkels, der Betätigungseinrichtung weg von einer Nullstellung nach Aktivierung der Regeleinrichtung und nach Erreichen eines zweiten vorbestimmten Abstandes unter automatischem Anhalten des Fahrzeuges den Abstand zwischen dem Fahrzeug und dem in Bewegungsrichtung nächsten Objekt bis zu dem ersten vorbestimmten Abstand, wobei der tatsächliche Abstand zwischen dem ersten und zweiten vorbestimmten Abstand daraufhin vorzugsweise abhängig von der Stellung der Betätigungseinrichtung ist. Auf diese Weise kann vorteilhaft der Abstand zum nächstliegenden Hindernis in Fahrtrichtung angepasst werden.

Gemäß einer weiteren bevorzugten Weiterbildung hält das Fahrzeug nach Aktivierung der Regeleinrichtung bei einer Nullstellung der Betätigungseinrichtung an, wobei ein manueller Bremseingriff über ein Bremspedal jederzeit zugelassen wird und vorzugsweise Steigung und Gefälle in ihrer Wirkung auf das Fahrzeug kompensiert werden. Der Fahrer bedient zur Steuerung der Fahrgeschwindigkeit während des Einparkmanövers somit vorteilhaft nur das Fahrpedal bzw. Gaspedal, wobei die Bedienung des Bremspedals nicht erforderlich, aber jederzeit möglich ist. Der Geschwindigkeitsregler greift sowohl in das Motormanagement als auch in die Bremsensteuerung ein und kompensiert die Einflüsse von Steigungen bzw. Gefällen. Dennoch kann der Fahrer in Notsituationen jederzeit das Bremspedal betätigen und damit das Fahrzeug sofort abstoppen.

Gemäß einer weiteren bevorzugten Weiterbildung setzt die Regeleinrichtung nach deren Aktivierung abgespeicherte Kennlinienfelder zur Generierung der momentanen Sollgeschwindigkeit in Abhängigkeit von der Stellung der Betätigungseinrichtung und von dem Abstand zum in Bewegungsrichtung nächstliegenden Objekt ein. Auf diese Weise wird einfach eine Sollgeschwindigkeit und damit indirekt eine Verzögerung bei Annäherung an ein Objekt bzw. ein Hindernis bereitgestellt.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine schematische Draufsicht eines Pkws mit einer Geschwindigkeitsregelvorrichtung zur Erläuterung einer Ausführungsform der vorliegenden Erfindung;
- Fig. 2: ein schematisches Diagramm einer Kennlinienfeldvariante zur Erläuterung einer Ausführungsform der vorliegenden Erfindung;
- Fig. 3: ein schematisches Diagramm einer weiteren Kennlinienfeldvariante zur Erläuterung einer Ausführungsform der vorliegenden Erfindung;
- Fig. 4: ein schematisches Diagramm einer weiteren Kennlinienfeldvariante zur Erläuterung einer Ausführungsform der vorliegenden Erfindung;
- Fig. 5: ein schematisches Blockdiagramm zur Erläuterung einer Ausführungsform der vorliegenden Erfmdung;
- Fig. 6: ein schematisches Blockdiagramm zur Erläuterung einer weiteren Ausführungsform der vorliegenden Erfindung;
- Fig. 7: ein schematisches Blockdiagramm zur Erläuterung einer weiteren Ausführungsform der vorliegenden Erfindung; und
- Fig. 8: ein schematisches Zustandsdiagramm zur Erläuterung der Funktionsweise einer Ausführungsform der vorliegenden Erfindung.

In den Figuren bezeichnen gleiche Bezugszeichen gleiche oder funktionsgleiche Bestandteile.

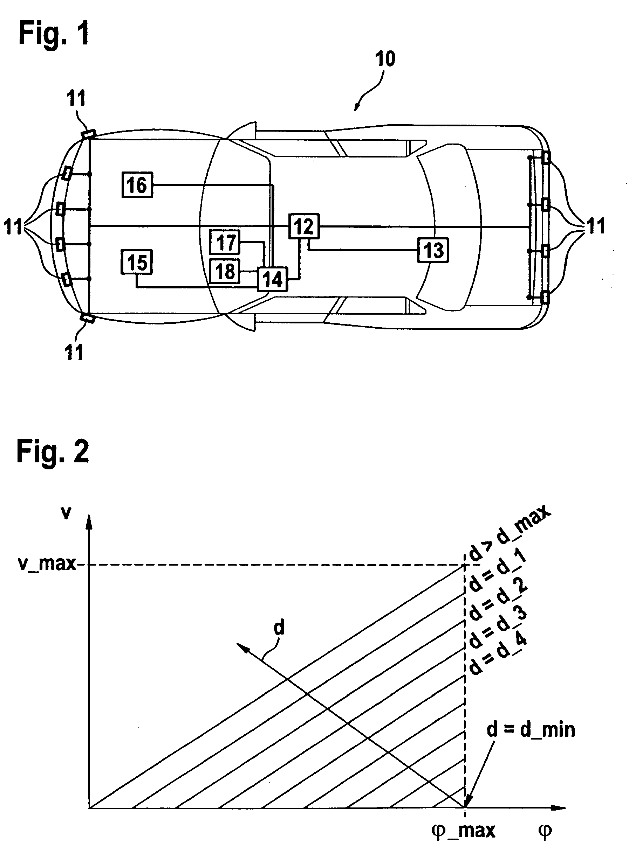

In Fig. 1 ist die schematische Draufsicht eines Kraftfahrzeugs 10 dargestellt. Das Fahrzeug 10 ist am Heck und vorzugsweise ebenfalls an der Front mit Abstandssensoren 11 zur Detektion von Objekten bzw. Hindernissen im Umfeld des Fahrzeugs 10 versehen. Die Abstandssensoren 11 weisen beispielsweise Ultraschallsensoren, Radarsensoren und/oder Lidarsensoren auf und bilden eine Detektionseinrichtung. Die Signale der Abstandssensoren 11 werden einer Verarbeitungseinrichtung 12 zugeführt, in welcher der Abstand d zu einem nächstliegenden Objekt, insbesondere in Bewegungsrichtung des Fahrzeugs, ermittelt wird. Vorzugsweise wird dieser Abstand d über eine Anzeigeeinrichtung 13, welche mit der Verarbeitungseinrichtung 12 gekoppelt ist, in codierter Form visuell und/oder akustisch, d.h. beispielsweise durch eine Balkenanzeige oder eine Tonfolge, angezeigt. Der in der Verarbeitungseinrichtung 12 mit Hilfe der Abstandssensoren 11 gewonnene Abstand d zum nächstliegenden Objekt, vorzugsweise in Bewegungsrichtung des Fahrzeugs 10, wird einer Regeleinrichtung 14 zugeführt. Die Regeleinrichtung 14 ist mit einer Bremseinrichtung 15 und einer Antriebseinrichtung 16 des Fahrzeugs gekoppelt. Die Antriebseinrichtung 16 weist vorzugsweise eine Verbrennungskraftmaschine-Getriebeeinheit auf, wobei das Getriebe bzw. die Kraftübertragung (nicht dargestellt) vorzugsweise eine variable Drehmomentübertragung zwischen Verbrennungskraftmaschine (ebenfalls nicht dargestellt) und der/den Antriebsachsen erlaubt. Ein Elektromotor als Antriebseinrichtung 16 ist ebenfalls angedacht.

Über eine Einschalteinrichtung 17 ist die Regeleinrichtung 14, mit welcher sie gekoppelt ist, manuell und/oder semi-automatisch, beispielsweise bei Einlegen einer Rückwärtsfahrstufe des Fahrzeugs 10, aktivierbar. Die Regeleinrichtung 14 kann über die Einschalteinrichtung 17, vorzugsweise auch manuell, deaktiviert werden. Die Regeleinrichtung 14 ist mit einer Betätigungseinrichtung 18, vorzugsweise mit dem Fahr- bzw. Gaspedal des Fahrzeugs 10 gekoppelt, welches vorzugsweise einen Winkelgeber zur Identifikation eines Winkels ϕ ausgehend von der Nullstellung der Betätigungseinrichtung 18 aufweist. Die Geschwindigkeitsregeleinrichtung 14 kann vorzugsweise in der Verarbeitungseinrichtung 12 integriert werden. Alternativ ist auch die Lokalisierung in Steuergeräten der Bremseinrichtung 15 oder der Antriebseinrichtung 16, beispielsweise Motor-/Getriebemanagement, oder einem anderen Steuergerät denkbar. Neben der Stellung der Betätigungseinrichtung 18 wird von der Regeleinrichtung 14 vorzugsweise auch die Stellung des Bremspedals erfasst, da ein manueller Bremseingriff durch einen Fahrer stets gewährleistet sein soll. In der Regeleinrichtung 14 werden außerdem vorzugsweise Signale von Radimpulsgebern (nicht dargestellt) zur Ermittlung der Geschwindigkeit und des gefahrenen Weges des Fahrzeugs 10 ausgewertet.

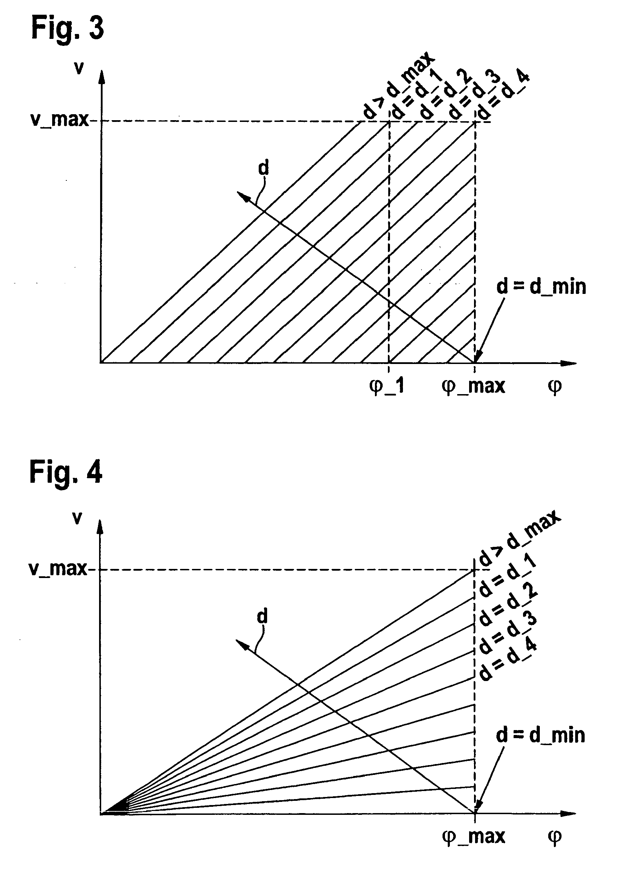

Bezüglich der grundsätzlichen Funktionsweise des Systems werden nachfolgend einige exemplarische Realisierungen erläutert. Nach Aktivierung der Regeleinrichtung 14 über die Einschalteinrichtung 17 bedeutet das Lösen der Betätigungseinrichtung, vorzugsweise des Fahrpedals, d.h. Nullstellung ϕ= 0°, eine Sollgeschwindigkeit von 0 km/h. Ein volles Durchtreten, d.h. Winkel ϕ = ϕ_max, bedeutet eine Sollgeschwindigkeit v = v_max von vorzugsweise 10 km/h, wenn im Detektionsbereich der Detektionseinrichtung 11 kein Objekt bzw. Hindernis identifiziert wird. Der Parameter v_max wird in Abhängigkeit von der gewünschten Charakteristik der Bremsverzögerung und der Leistungsfähigkeit des Umfelderfassungssystems, wie der Reichweite, Latenzzeit, Detektionssicherheit usw. vorab eingestellt. Die gleichzeitige Abhängigkeit der Sollgeschwindigkeit v von der Fahrpedalstellung ϕ und dem Abstand d zu einem im Detektionsbereich auftretenden Hindernis bzw. Objekt lässt sich als Kennlinienfeld gemäß Fig. 2, 3 und 4 darstellen. Grundsätzlich sind verschiedene Auslegungen eines Kennlinienfeldes denkbar, die ein unterschiedliches Regelverhalten des Systems bewirken. Neben den drei im folgenden Abschnitt dargestellten Auslegungsbeispielen sind beliebig weitere Auslegungsvarianten vorstellbar, welche beispielsweise durch Abweichung der Kennlinienform von einer geraden oder durch Kombination der nachfolgend beschriebenen Kennlinienfelder gemäß Fig. 2 bis 4 generiert werden können. Dabei kann z.B. in den Beispielen gemäß Fig. 2 und Fig. 3 die Geradensteigung variiert werden.

Die Kennlinienfelder geben lediglich die statische Abhängigkeit der Sollgeschwindigkeit v von den Eingangsgrößen, d.h. den Winkel der Betätigungseinrichtung ϕ zur Nullstellung und den Abstand d zu einem detektierten nächstliegenden Objekt wieder. Das dynamische Übergangsverhalten, insbesondere Beschleunigungs- und Abbremsvorgänge bei sprunghaften Übergängen zwischen weit voneinander entfernten Punkten im Kennlinienfeld, welche für Komfort-, Sicherheits- und Stabilitätsgesichtspunkte des Gesamtsystems relevant sind, werden im Nachfolgenden nicht weiter beleuchtet.

Die mit Bezug auf die Fig. 2, 3 und 4 dargestellten Kennlinienfeldbeispiele zeichnen sich durch folgende gemeinsame Eigenschaften aus: Im Falle eines Umfelds um das Fahrzeug 10 ohne Hindernis bzw. Objekt im Detektionsbereich kann die Sollgeschwindigkeit v durch Änderung der Stellung der Betätigungseinrichtung 18 weg von der Nullstellung, d.h. beispielsweise durch Druck auf das Fahrpedal, kontinuierlich von null bis v_max gesteigert werden. Durch Änderung der Stellung der Betätigungseinrichtung 18 in Richtung der Nullstellung, d.h. beispielsweise durch Zurücknahme des Fahrpedals, kann die Sollgeschwindigkeit v entsprechend wieder reduziert werden. Der hindernisfreie Fall ist durch die Abwesenheit detektierbarer Objekte im Erfassungsbereich der Sensorik gekennzeichnet, welche eine maximale Reichweite d = d_max aufweist. Bei Annäherung an ein in Bewegungsrichtung des Fahrzeugs nächstliegendes Hindernis wird die Geschwindigkeit v kontinuierlich bis auf 0 km/h durch die Regeleinrichtung 14 in Verbindung mit der Antriebseinrichtung 16 und der Bremseinrichtung 15 heruntergeregelt. Das Fahrzeug 10 hält in einem vorbestimmten Abstand d_min, d.h. in sicherer Entfernung, vom Hindernis bzw. Objekt, an. Eine Kollision wird bei allen Stellungen der Betätigungseinrichtung 18 vom Gesamtregelsystem verhindert.

Durch Variation der Stellung der Betätigungseinrichtung 18, beispielsweise des Fahrpedalwinkels ϕ, hat der Fahrer die Möglichkeit, den Annäherungsvorgang an das in Bewegungsrichtung des Fahrzeugs 10 nächstliegende Objekt zu beeinflussen. Eine Änderung der Stellung der Betätigungseinrichtung 18 in Richtung der Nullstellung, d.h. eine Zurücknahme des Fahrpedals, nachdem das Fahrzeug beispielsweise durch die Regeleinrichtung 14 zum Stillstand gekommen ist, bewirkt keine Entfernung des Fahrzeugs 10 vom Hindernis, und somit keine Richtungsumkehr. Das Fahrzeug bleibt in einem solchen Fall stehen.

Mit Bezug auf Fig. 2 ist beispielhaft eine Charakteristik dargestellt, bei welcher nach Aktivierung der Regeleinrichtung 14 die maximale Geschwindigkeit v_max beim maximalen Fahrpedalwinkel ϕ_max erreicht wird. Der Fahrer kann durch die Fahrpedalstellung sowohl die Sollgeschwindigkeit v als auch die Halteentfernung, d.h. den Abstand d zum in Bewegungsrichtung des Fahrzeugs nächstliegenden Hindernis, bei welcher das Fahrzeug 10 zum Stehen kommt, kontinuierlich steuern. Nachdem das Fahrzeug 10 in einem vorbestimmten Abstand d_1-d_4 zum nächstliegenden Hindernis zum Stillstand gekommen ist, kann es durch stärkeren Druck, d.h. einen größeren Winkel zur Nullstellung, auf das Fahrpedal wieder in Bewegung gesetzt werden, um näher an das nächstliegende Objekt heranzufahren, wobei jedoch ein weiterer vorbestimmter Abstand d_min zum nächstliegenden Objekt nicht unterschritten werden kann.

Das exemplarische Kennlinienfeld gemäß Fig. 3 unterscheidet sich von dem mit Bezug auf Fig. 2 erläuterten Kennlinienfeld darin, dass die maximale Geschwindigkeit v_max bereits bei einem bestimmten Fahrpedalwinkel ϕ_1, welcher zwischen ϕ = 0 und ϕ = ϕ_max liegt, erreicht wird. Ein stärkeres Durchtreten des Fahrpedals bewirkt bei einem hindernisfreien Umfeld in Bewegungsrichtung des Fahrzeugs 10 keine weitere Erhöhung der Sollgeschwindigkeit v. Bei einer Annäherung an ein in Bewegungsrichtung des Fahrzeugs 10 nächstliegendes Hindernis bzw. Objekt und Unterschreitung des Abstandes d_4 bewirkt dagegen eine Änderung des Fahrpedalwinkels ϕ im Bereich zwischen ϕ_1 und ϕ_max eine kontinuierliche Änderung der Fahrgeschwindigkeit. Der Fahrer kann durch die Fahrpedalstellung sowohl die Geschwindigkeit v als auch die Halteentfernung, d.h. den Abstand d zum in Bewegungsrichtung des Fahrzeugs 10 nächstliegenden Hindernis, bei welchem das Fahrzeug zum Stehen kommt, kontinuierlich steuern. Nachdem das Fahrzeug in einem vorbestimmten Abstand d _1-d_4 zum Stillstand gekommen ist, kann es durch stärkeren Druck auf das Fahrpedal wieder in Bewegung gesetzt werden, um näher an das Hindernis heranzufahren, wobei ein vorbestimmter Minimalabstand d_min zwischen dem Fahrzeug 10 und dem in Bewegungsrichtung nächstliegenden Objekt eingehalten wird.

Als weiteres Beispiel ist in Fig. 4 ein Kennlinienfeld dargestellt, mit welchem die maximale Sollgeschwindigkeit v_max beim maximalen Fahrpedalwinkel ϕ_max erreicht wird. Die Halteentfernung, d.h. der Abstand d zum nächstliegenden Objekt in Bewegungsrichtung des Fahrzeugs 10, bei welchem das Fahrzeug zum Stehen kommt, kann bei dieser Variante durch die Fahrpedalstellung nicht kontinuierlich gesteuert werden. Das Fahrzeug bleibt grundsätzlich bei dem eingestellten Sicherheitsabstand d_min zum nächstliegenden Objekt in Bewegungsrichtung des Fahrzeugs 10 stehen, unabhängig von der Fahrpedalstellung. Durch Verändern der Fahrpedalstellung kann der Fahrer jedoch das Geschwindigkeits- bzw. Beschleunigungsprofil bis zum Erreichen des vorbestimmten Sicherheitsabstands d_min beeinflussen. Der Fahrer kann jedoch den Annäherungsvorgang, bei welchem die Geschwindigkeit v grundsätzlich automatisch verringert wird, vor Erreichen des vorbestimmten Mindestabstands d_min unterbrechen, indem der den Fuß ganz vom Fahrpedal nimmt, d.h. Nullstellung des Fahrpedals, wodurch das Fahrzeug sofort anhält.

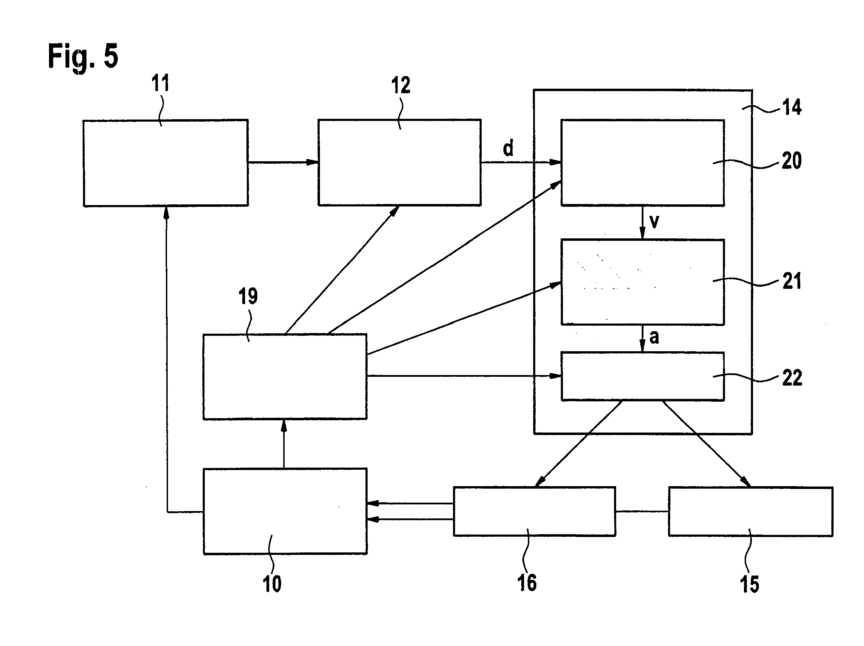

In Fig. 5 ist ein schematisches Blockschaltbild dargestellt, in welchem die Detektionseinrichtung 11 bzw. die Umfeldsensorik des Fahrzeugs 10 an die Verarbeitungseinrichtung 12 zur Situationsbewertung vorzugsweise eine Abstandsliste weitergibt. In der Abstandsliste sind die Abstände des Fahrzeugs zu Objekten im Umfeld erfasst. Die Verarbeitungseinrichtung identifiziert daraus das in Bewegungsrichtung des Fahrzeugs nächstliegende Objekt bzw. Hindernis und gibt dessen Abstand d an die Regeleinrichtung 14 weiter. Das Fahrzeug 10 verfügt neben der Umfeldsensorik 11 zusätzlich über Fahrzeugsensormittel 19, wie beispielsweise Raddrehzahlsensoren, deren Ergebnisse sowohl der Verarbeitungseinrichtung 12 zur Situationsbewertung als auch der Regeleinrichtung 14 zugehen. Mit Hilfe eines Kennlinienfeldes 20 wird aus dem Abstand d zum nächstliegenden Objekt in Bewegungsrichtung des Fahrzeugs eine Sollgeschwindigkeit vermittelt und einem Geschwindigkeitsregler 21 zugeführt. Der Geschwindigkeitsregler 21 ermittelt aus der Sollgeschwindigkeit v gegebenenfalls in Abhängigkeit von Informationen der Fahrzeugsensoren 19 einen Beschleunigungswert a. Daraus wird in einer LOC-Einrichtung 22 ein Steuersignal für die Antriebseinrichtung 16 und/oder die Bremseinrichtung 15 abgeleitet, welche das Fahrzeug 10 direkt beschleunigen oder abbremsen. Die LOC- Einrichtung 22 dient einer Längsregelung (longitudinal control) des Fahrzeugs, in welcher eine Koordinierung bzw. Aufgabenaufteilung für die Antriebs- und Bremseinrichtung 15, 16 in Abhängigkeit von der Beschleunigung a erfolgt.

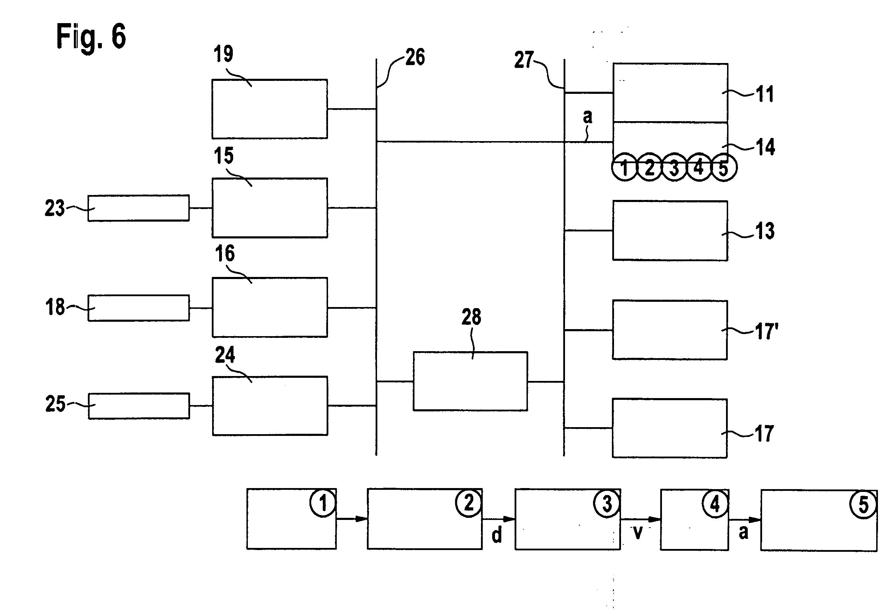

Mit Bezug auf Fig. 6 ist eine Variante einer Architektur der Geschwindigkeitsregelvorrichtung für Rangiervorgänge gemäß einer Ausführungsform der vorliegenden Erfindung dargestellt. Über einen Triebstrang-CAN-Bus 26 sind Fahrzeugsensoren 19, wie beispielsweise eine ESP-Sensorik, an die Bremseinrichtung 15, welche über ein Bremspedal 23 aktiviert wird, gekoppelt. Ebenfalls an diesen Triebstrang-CAN-Bus 26 ist die Antriebseinrichtung 16, aktiviert über das Fahrpedal 18, und eine Getriebeeinheit 24, gesteuert durch einen Wählhebel 25, angekoppelt, wobei die Getriebeeinheit 24 vorzugsweise ein Automatikgetriebe aufweist. Über ein Gateway 28 ist der Triebstrang-CAN 26 an einen Innenraum-CAN 27 gekoppelt. Der Innenraum-CAN-Bus 27 verbindet die Detektionseinrichtung 11, welche entsprechende Sensormittel, wie z.B. Ultraschall-Sensoren, aufweist, mit dem Gateway 28. Der Triebstrang-CAN-Bus 26 ist darüber hinaus direkt mit dem Ausgangssignal a, d.h. einer Beschleunigungsvorgabe, der Regeleinrichtung 14 gekoppelt. Eine Anzeigeeinrichtung 13, d.h. ein Lautsprecher und/oder ein Display zur Abstandsanzeige, sowie Einschalt- bzw. Abschalteinrichtungen 17 und 17' sind vorzugsweise ebenfalls mit dem Innenraum-CAN-Bus 27 verbunden. Eine Einschalteinrichtung 17 dient zur Aktivierung/Deaktivierung des Geschwindigkeitsregelsystems, wobei die Bedieneinheit 17' vorzugsweise eine reine Parkpilotfunktion, d.h. einen reinen Abstandswarnhinweis, aktiviert bzw. deaktiviert.

Die von der Regeleinrichtung 14 in Fig. 6 vollzogenen Schritte 1 bis 5, gekennzeichnet durch die Ziffern 1 bis 5 jeweils in einem Kreis, sind in Fig. 6 unten zusätzlich dargestellt. Auf die Objektdetektion 1 folgt eine Situationsbewertung 2, in welcher der Abstand d zum in Bewegungsrichtung des Fahrzeugs nächstliegenden Hindernis identifiziert wird. Im Schritt 3 erfolgt eine Sollwertvorgabe, beispielsweise anhand eines Kennlinienfeldes in Form einer Sollgeschwindigkeit v, die in einem Regler im Schritt 4 in eine Beschleunigungsvorgabe a umgewandelt wird. Die Beschleunigungsvorgabe a wird dann im Schritt 5 direkt an die Antriebs- bzw. Bremseinrichtung 15, 16 weitergegeben, um das Fahrzeug 10 entsprechend abzubremsen bzw. zu beschleunigen.

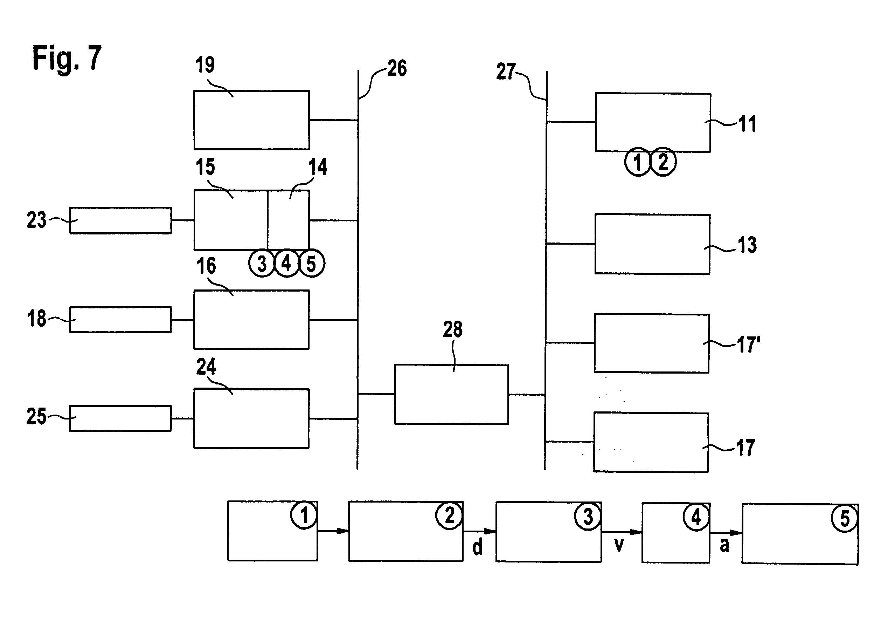

Eine weitere Variante der Systemarchitektur ist mit Bezug auf Fig. 7 dargestellt. Sie unterscheidet sich von der mit Bezug auf Fig. 6 erläuterten Variante darin, dass die eigentliche Regeleinrichtung 14 direkt im Bereich der Bremseinrichtung 15 angesiedelt ist, und nur eine Verbindung mit dem Innenraum-CAN-Bus 27 über das Gateway 28 besteht. Die oben erläuterten Schritte 1 und 2 erfolgen hierbei im Zuge der Umfelddetektion mit der Detektionseinrichtung 11, wobei die Schritte 3, 4 und 5 an anderer Stelle, nämlich angelagert der Bremseinrichtung 15 in der Regeleinrichtung 14, erfolgen.

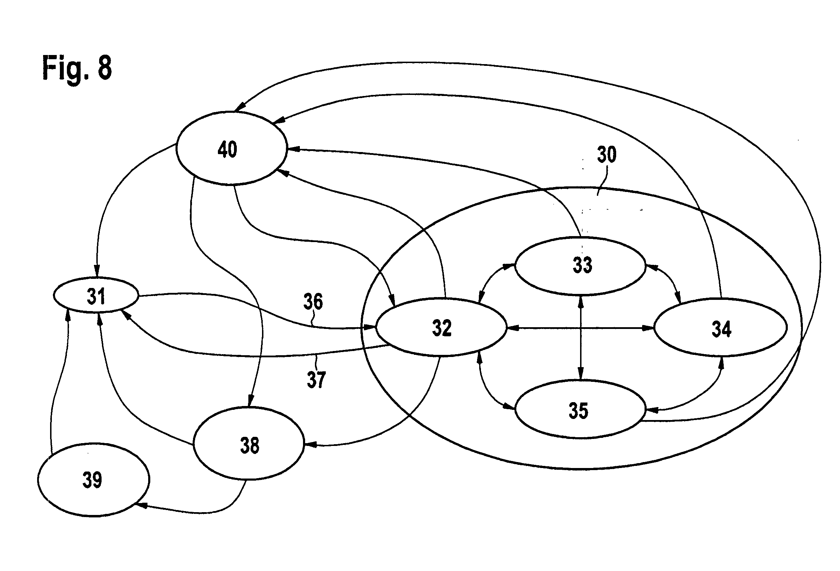

Mit Bezug auf Fig. 8 ist ein schematisches Zustandsdiagramm zur Erläuterung der Funktionsweise einer Ausführungsform der vorliegenden Erfindung dargestellt. Mit Bezugszeichen 30 ist das aktive Geschwindigkeitsregelsystem bezeichnet. Das passive System ist durch Bezugszeichen 31 bezeichnet. Ist das System aktiv 30, so werden der Stillstand 32, freies Fahren 33, reduzierte Dynamik 34 und komfortables Zielbremsen 35 als Zustände unterschieden. Ist das Fahrzeug im Stillstand 32, so lässt sich das Geschwindigkeitsregelsystem durch den Fahrer aktivieren 36, wenn es noch nicht aktiv ist, oder deaktivieren 37, wenn das System bereits im aktivierten Zustand 30 ist. Ist das Regelsystem aktiv 30 und das Fahrzeug im Stillstand 32, so kann ein Übergang in das freie Fahren 33 oder das geschwindigkeitsgeregelte bzw. abstandsgeregelte Zielbremsen 35 erfolgen.

Befindet sich das Fahrzeug im Stillstand 32 bei aktiviertem System 30, und verstreicht eine vorbestimmte Zeit, so wird ein Stillstand-Absicherungszustand 38 aktiviert. Diese Stillstandsabsicherung 38 ist ein temporärer Zustand der automatischen Einleitung von Maßnahmen zur Sicherung des Stillstandes des Fahrzeugs über einen längeren Zeitraum. Vorzugsweise wird dieser Stillstand-Absicherungszustand 38 bei Aktivierung einer automatischen Parkbremse ebenfalls eingeschaltet. Sobald das Fahrzeug sicher steht, d.h. bei einem Fahrzeug mit Automatikgetriebe, beispielsweise die Wählhebelstellung P eingelegt ist, erfolgt automatisch der Übergang in den passivierten Systemzustand 31. Falls die Einleitung der entsprechenden Maßnahmen nicht erfolgreich ist, erfolgt eine Warnmeldung 39. Die Warnmeldung 39 kann dann beispielsweise durch den Fahrer wieder deaktiviert werden, um in den passiven Systemzustand 31 zu gelangen. Die Warnmeldung 39 dient als akustischer und/oder optischer Hinweis an den Fahrer, entsprechende Sicherungsmaßnahmen zu ergreifen.

Ist das Geschwindigkeitsregelsystem aktiviert 30, so wird ein Zustand mit reduzierter Dynamik 34 eingeschaltet, wenn bei eingeschränkter Umfelderfassung aufgrund springender Reflexe bzw. kleiner Rückstrahlquerschnitte Objekte bzw. Hindernisse schlecht detektiert werden, oder aber die Lenkwinkelgeschwindigkeit hoch ist und deswegen eine Fahrschlauchzuordnung, d.h. eine genaue Bewegungsrichtungszuordnung des Fahrzeugs, erschwert ist. Außerdem kann dieser Zustand 34 bei unklarer Objektbewegungsrichtung aktiviert werden, wobei in diesem Zustand 34 generell die Manövriergeschwindigkeit herabgesetzt wird. Außerdem besteht die Möglichkeit, beispielsweise die Bremsbereitschaft im Zustand 34 zu erhöhen oder den Sicherheitsabstand zu einem in Bewegungsrichtung des Fahrzeugs liegenden Hindernis zu vergrößern. Tritt eine Ausnahmesituation in irgendeinem der Zustände bei aktiviertem Regelsystem 30 auf, so wird ein Störungsmodus 40 aktiviert. Im Störungsmodus 40 wird ein sicheres Anhalten gewährleistet, wenn das Fahrzeug noch nicht steht. Falls das Fahrzeug in diesem Modus 40 bereits steht, wird es mit der Betriebsbremse im Stand gehalten, wobei vorzugsweise eine Störungsanzeige erfolgt. Ist die Ausnahmesituation vorüber, so erfolgt eine Umschaltung in den Stillstandsmodus 32 bei aktiviertem Regelsystem 30. Wenn das Fahrzeug steht, tritt nach Deaktivierung des Regelsystems nach vorangehendem Störungsmodus 40 der passivierte Zustand 31 des Regelsystems ein. Wird im Störungsmodus 40 hingegen die Zündung ausgeschaltet oder verstreicht eine vorbestimmte Zeit, so geht das System in den Stillstand-Absicherungsmodus 38.

Eine Aktivierung 36 bzw. Deaktivierung des Regelsystems durch den Fahrer ist vorzugsweise nur möglich bei gleichzeitig gedrücktem Bremspedal und gedrückter Einschalteinrichtung und nicht aktivierter Betätigungseinrichtung, d.h. beispielsweise nicht niedergetretenem Fahrpedal. Vorzugsweise hat die Einschalteinrichtung eine "Toggle"-Funktion und der Zustand, d.h. aktiv oder passiv, wird durch eine Anzeige mitgeteilt. Das Einlegen der Fahrstufe P bei einem Automatikgetriebe-Fahrzeug deaktiviert ebenfalls das System. Eine Ausnahmesituation, wie sie zur Aktivierung des Störungsmodus 40 vorliegen muss, ist beispielsweise eine Systemstörung oder ein Ausschalten der Zündung oder eine angezogene Handbremse oder ein sich bewegendes Objekt im Detektionsbereich der Detektionseinrichtung oder eine Überforderung des Systems. Für ein sicheres Stehen des Fahrzeugs muss das Getriebe in Stellung P sein, um ein Anrollen des Fahrzeugs sicher zu verhindern. Das Setzen der Parkbremse allein reicht eventuell nicht aus, um ein sicheres Stehen des Fahrzeug zu garantieren.

Obwohl die vorliegende Erfmdung vorstehend anhand bevorzugter Ausführungsbeispiele beschrieben wurde, ist sie darauf nicht beschränkt, sondern auf vielfältige Weise modifizierbar. So ist das beschriebene Regelungsverfahren bzw. die Regelungsvorrichtung nicht nur auf den Einsatz in Personenkraftwagen eingegrenzt, sondern kann bei vielfältigen Fahrzeugen, wie beispielsweise Lastkraftwagen, Bussen, Gabelstaplern oder ähnlichem eingesetzt werden. Darüber hinaus ist die Anordnung der Einzelkomponenten gemäß Fig. 1 beispielhaft zu sehen, da insbesondere die Verarbeitungseinrichtung 12, die Regeleinrichtung 14, die Anzeigeeinrichtung 13, die Bremseinrichtung 15, die Antriebseinrichtung 16, die Einschalteinrichtung 17 und die Betätigungseinrichtung 18 in anderer Konfiguration auftreten können. Insbesondere die Betätigungseinrichtung 18 ist beispielsweise auch anders als in Form eines Fahrpedals bzw. Gaspedals gestaltbar, beispielsweise als von Hand zu betätigender Schieber, vorzugsweise mit Rückstellkraft. Außerdem sind die Kennlinienfelder der Fig. 2 bis 4 auch durch Kennlinienfelder mit nicht linear verlaufenden Kennlinien vorstellbar, um ein sanft eingreifendes Komfortsystem zum Rangieren/Einparken bzw. Ausparken bereitzustellen, so dass das subjektive Fahrgefühl dem Anfahren gegen einen wachsenden Widerstand (Gummibandeffekt) bei der Annäherung an ein Hindernis entspricht.

## Patentansprüche

1. Vorrichtung zur Regelung der Geschwindigkeit eines Fahrzeugs (10) beim Rangieren / Einparken des Fahrzeugs (10) mit:
einer Detektionseinrichtung (11, 12) zum Detektieren von Objekten im Umfeld des Fahrzeugs (10) und zum Erfassen des Abstandes zu einem in Bewegungsrichtung des Fahrzeugs (10) nächstliegenden Objekt;
einer Regeleinrichtung (14) zur Regelung der Geschwindigkeit (v) des Fahrzeugs (10) in Abhängigkeit von der Stellung einer Betätigungseinrichtung (18) und vom Abstand (d) zu dem in Bewegungsrichtung des Fahrzeugs (10) nächstliegenden Objekt gemäß einer vorbestimmten Geschwindigkeits-/Abstandsrelation; und
einer Steuereinrichtung (15, 16) zum automatischen Steuern einer Bremseinrichtung (15) und einer Antriebseinrichtung (16) des Fahrzeugs (10) in Abhängigkeit von einem entsprechenden Ausgangssignal der Regeleinrichtung (14).

2. Vorrichtung nach Anspruch 1,
**dadurch gekennzeichnet,**
**dass** die Detektionseinrichtung (11, 12) Ultraschallsensoren und/oder Radarsensoren und/oder Lidarsensoren aufweist, welche vorzugsweise an der Fahrzeugfront und/oder dem Fahrzeugheck vorgesehen sind.

3. Vorrichtung nach Anspruch 1 oder 2,
**dadurch gekennzeichnet,**
**dass** eine Einschalteinrichtung (17) zur Aktivierung der Regeleinrichtung (14) vorgesehen ist, welche manuell und/oder semi-automatisch beim manuellen Einlegen einer Rückwärtsfahrstufe der Antriebseinrichtung (16) aktivierbar ist.

4. Vorrichtung nach einem der vorangehenden Ansprüche,
**dadurch gekennzeichnet,**
**dass** die Betätigungseinrichtung (18) eine automatisch rückziehende Nullstellung und ein Fahrpedal oder ein Gaspedal, vorzugsweise jeweils mit Stellungswinkelerfassung, aufweist.

5. Vorrichtung nach einem der vorangehenden Ansprüche,
**dadurch gekennzeichnet,**
**dass** eine Anzeigeeinrichtung (13) zur visuellen und/oder akustischen Anzeige des Abstands (d) zum in Bewegungsrichtung des Fahrzeugs (10) nächstliegenden Objekt vorgesehen ist.

6. Verfahren zur Regelung der Geschwindigkeit eines Fahrzeugs (10) beim Rangieren/Einparken des Fahrzeugs (10) mit den Schritten:
Detektieren von Objekten im Umfeld des Fahrzeugs (10) und Erfassen des Abstandes zwischen einem dem Fahrzeug (10) in Bewegungsrichtung nächstliegenden Objekt und dem Fahrzeug (10) mit einer Detektionseinrichtung (11, 12);
Regeln der Geschwindigkeit (v) des Fahrzeugs (10) unter Einhaltung eines ersten vorbestimmten Abstandes (d_min) zu dem in Bewegungsrichtung nächstliegenden Objekt in Abhängigkeit von der Stellung einer Betätigungseinrichtung (18) und vom Abstand (d) zu dem in Bewegungsrichtung des Fahrzeugs (10) nächsten Objekt gemäß einer vorbestimmten Geschwindigkeits-/Abstandsrelation; und
Steuern einer Bremseinrichtung (15) und eines Antriebseinrichtung (16) des Fahrzeugs (10) in Abhängigkeit von einem entsprechenden Ausgangssignal der Regeleinrichtung (14) mittels einer Steuereinrichtung (15, 16).

7. Verfahren nach Anspruch 6,
**dadurch gekennzeichnet,**
**dass** ein Ändern der Stellung, vorzugsweise des Winkels (ϕ), der Betätigungseinrichtung (18) die Sollgeschwindigkeit des Fahrzeugs (10), vorzugsweise im Bereich zwischen null und zehn Km/h, nach Aktivierung der Regeleinrichtung (14) beim Rangieren bis zu einem zweiten vorbestimmten Abstand (d_1-d_4) zu dem in Bewegungsrichtung nächsten Objekt verändert, wobei der zweite vorbestimmte Abstand (d_1-d_4) größer oder gleich als der erste vorbestimmte Abstand (d_min) ist.

8. Verfahren nach Anspruch 6 oder 7,
**dadurch gekennzeichnet,**
**dass** ein Ändern der Stellung, vorzugsweise des Winkels (ϕ), der Betätigungseinrichtung (18) weg von einer Nullstellung nach Aktivierung der Regeleinrichtung (14) und nach Erreichen eines zweiten vorbestimmten Abstandes (d_1-d_4), wobei das Fahrzeug (10) automatisch anhält, den Abstand (d) zwischen dem Fahrzeug (10) und dem in Bewegungsrichtung nächsten Objekt bis zu dem ersten vorbestimmten Abstand (d_min) weiter kontinuierlich verringert, wobei der tatsächliche Abstand (d) zwischen dem ersten und zweiten vorbestimmten Abstand (d_min, d_1-d_4) daraufhin vorzugsweise abhängig von der Stellung der Betätigungseinrichtung (18) ist.

9. Verfahren nach einem der Ansprüche 6 bis 8,
**dadurch gekennzeichnet,**
**dass** nach Aktivierung der Regelungseinrichtung (14) bei einer Nullstellung der Betätigungseinrichtung (18) das Fahrzeug (10) anhält, wobei ein manueller Bremseingriff über ein Bremspedal jederzeit zugelassen wird, und vorzugsweise Steigungen und Gefälle in ihrer Wirkung auf das Fahrzeug (10) kompensiert werden.

10. Verfahren nach einem der Ansprüche 6 bis 9,
**dadurch gekennzeichnet,**
**dass** die Regeleinrichtung (14) nach deren Aktivierung abgespeicherte Kennlinienfelder zur Generierung der momentanen Sollgeschwindigkeit (v) in Abhängigkeit von der Stellung der Betätigungseinrichtung (18) und von dem Abstand (d) zum in Bewegungsrichtung nächstliegenden Objekt einsetzt.

## Claims

1. Apparatus for regulating the velocity of a vehicle (10) during manoeuvring/parking of the vehicle (10), comprising:
- a detection device (11, 12) for detecting objects in the environment of the vehicle (10) and for detecting the distance to an object lying the closest in the direction of movement of the vehicle (10); a regulating device (14) for regulating the velocity (v) of the vehicle (10) depending on the position of an actuation device (18) and on the distance (d) to the object lying the closest in the direction movement of the vehicle (10), in accordance with a predetermined velocity/distance relation; and
a control device (15, 16) for automatically controlling a braking device (15) and a drive device (16) of the vehicle (10) depending on a corresponding output signal of the regulating device (14).

2. Apparatus according to Claim 1,
**characterized**
**in that** the detection device (11, 12) has ultrasonic sensors and/or radar sensors and/or lidar sensors, which are preferably provided at the front of the vehicle and/or the rear of the vehicle.

3. Apparatus according to Claim 1 or 2,
**characterized**
**in that** provision is made of a switch-on device (17) for activating the regulating device (14), which can be activated manually and/or semi-automatically upon manual engagement of a reversing stage of the drive device (16).

4. Apparatus according to any of the preceding claims,
**characterized**
**in that** the actuation device (18) has an automatically returning zero position and an accelerator pedal, preferably in each case with position angle detection.

5. Apparatus according to any of the preceding claims,
**characterized**
**in that** provision is made of an indication device (13) for visual and/or acoustic indication of the distance (d) to the object lying the closest in the direction of movement of the vehicle (10).

6. Method for regulating the velocity of a vehicle (10) during manoeuvring/parking of the vehicle (10), comprising the following steps:
detecting objects in the environment of the vehicle (10) and detecting the distance between an object lying the closest to the vehicle (10) in the direction of movement and the vehicle (10) by means of a detection device (11, 12);
regulating the velocity (v) of the vehicle (10) whilst complying with a first predetermined distance (d_min) to the object lying the closest in the direction of movement depending on the position of an actuation device (18) and on the distance (d) to the object that is closest in the direction of movement of the vehicle (10), in accordance with a predetermined velocity/distance relation; and
controlling a braking device (15) and a drive device (16) of the vehicle (10) depending on a corresponding output signal of the regulating device (14) by means of a control device (15, 16).

7. Method according to Claim 6,
**characterized**
**in that** a change in the position, preferably the angle (ϕ), of the actuation device (18) alters the desired velocity of the vehicle (10), preferably within the range of between zero and ten km/h, after activation of the regulating device (14) during manoeuvring up to a second predetermined distance (d_1-d_4) to the object that is closest in the direction of movement, wherein the second predetermined distance (d_1-d_4) is greater than or equal to the first predetermined distance (d_min).

8. Method according to Claim 6 or 7,
**characterized**
**in that** a change in the position, preferably the angle (ϕ), of the actuation device (18) away from a zero position after activation of the regulating device (14) and after reaching a second predetermined distance (d_1-d_4), where the vehicle (10) stops automatically, continuously reduces further the distance (d) between the vehicle (10) and the object that is closest in the direction of movement up to the first predetermined distance (d_min), where the actual distance (d) between the first and second predetermined distances (d_min, d_1-d_4) is thereupon preferably dependent on the position of the actuation device (18).

9. Method according to any of Claims 6 to 8,
**characterized**
**in that** after activation of the regulating device (14), in the case of a zero position of the actuation device (18), the vehicle (10) stops, where a manual braking intervention via a brake pedal is permitted at any time, and the effect of inclines and declivities on the vehicle (10) is preferably compensated for.

10. Method according to any of Claims 6 to 9,
**characterized**
**in that** the regulating device (14), after the activation thereof, uses stored families of characteristic curves for generating the instantaneous desired velocity (v) depending on the position of the actuation device (18) and on the distance (d) to the object lying closest in the direction of movement.

## Revendications

1. Dispositif de régulation de la vitesse d'un véhicule (10) lors d'une manoeuvre de rangement ou de stationnement du véhicule (10) comprenant :
- une installation de détection (11, 12) pour détecter des objets dans l'environnement du véhicule (10) et pour saisir la distance par rapport à l'objet le plus proche situé dans la direction de mouvement du véhicule (10) ;
- une installation de régulation (14) pour réguler la vitesse (v) du véhicule (10) en fonction de la position d'une installation d'actionnement (18) et de la distance (d) par rapport à l'objet le plus proche dans la direction de déplacement du véhicule (10) selon une relation vitesse/distance prédéfinie ; et
- une installation de commande (15, 16) pour commander automatiquement une installation de frein (15) et une installation d'entraînement (16) du véhicule (10) en fonction d'un signal de sortie correspondant de l'installation de régulation (14).

2. Dispositif selon la revendication 1,
**caractérisé en ce que**
l'installation de détection (11, 12) comporte des capteurs à ultrason et/ou des capteurs radar et/ou des capteurs lidar, prévus de préférence en façade du véhicule et/ ou à l'arrière du véhicule.

3. Dispositif selon l'une quelconque des revendications 1 ou 2,
**caractérisé en ce qu'**
une installation de mise en oeuvre (17) est prévue pour activer l'installation de régulation (14), cette installation de mise en oeuvre étant actionnée manuellement et/ou de manière semi-automatique lors du passage de la marche arrière dans l'installation d'entraînement (16).

4. Dispositif selon l'une quelconque des revendications précédentes,
**caractérisé en ce que**
l'installation d'actionnement (18) comporte une position zéro, rappelée automatiquement et une pédale d'accélérateur et de préférence chaque fois avec saisie de l'angle de positionnement.

5. Dispositif selon l'une quelconque des revendications précédentes, **caractérisé par**
une installation d'affichage (13) pour l'affichage visuel et/ou acoustique de la distance (d) par rapport à l'objet le plus proche situé dans la direction de déplacement du véhicule (10).

6. Procédé de régulation de la vitesse d'un véhicule (10) lors d'une manoeuvre de rangement ou de stationnement du véhicule (10) comprenant les étapes suivantes :
- détection des objets dans l'environnement du véhicule et saisie de la distance entre l'objet le plus proche du véhicule (10) dans sa direction de déplacement et du véhicule (10) avec une installation de détection (11, 12) ;
- régulation de la vitesse (v) du véhicule (10) en respectant une première distance prédéfinie (d_min) par rapport à l'objet le plus proche dans la direction de déplacement en fonction de la position d'une installation d'actionnement (18) et de la distance (d) par rapport à l'objet le plus proche dans la direction de déplacement du véhicule (10) selon une relation prédéfinie vitesse/distance, et
- commande d'une installation de frein (15) et d'une installation d'entraînement (16) du véhicule (10) en fonction d'un signal de sortie correspondant de l'installation de régulation (14) à l'aide d'une installation de commande (15, 16).

7. Procédé selon la revendication 6,
**caractérisé en ce qu'**
un changement de position, de préférence de l'angle (ϕ) de l'installation d'actionnement (18) modifie la vitesse de consigne du véhicule (10) de préférence dans une plage comprise entre 0 et 10 Km/h, après activation de l'installation de régulation (14) au cours d'une manoeuvre de rangement jusqu'à une seconde distance prédéfinie (d_1-d_4) par rapport à l'objet le plus proche dans la direction de déplacement, la seconde distance prédéfinie (d_1-d_4) étant supérieure ou égale à la première distance prédéfinie (d_min).

8. Procédé selon l'une quelconque des revendications 6 ou 7,
**caractérisé en ce qu'**
un changement de position de préférence de l'angle (ϕ) de l'installation d'actionnement (18) s'écartant d'une position zéro après activation de l'installation de régulation (14) et après avoir atteint une seconde distance prédéfinie (d_1-d_4),
le véhicule (10) s'arrêtant automatiquement, diminue la distance (d) entre le véhicule (10) et l'objet le plus proche dans la direction de déplacement jusqu'à une première distance prédéfinie (d_min) par une diminution poursuivie de façon continue, la distance effective (d) entre la première et la seconde distance prédéfinie (d_min, d_1-d_4) ensuite dépendant de préférence de la position de l'installation d'actionnement (18).

9. Procédé selon l'une quelconque des revendications 6 à 8,
**caractérisé en ce qu'**
après activation de l'installation de régulation (14) pour une position zéro de l'installation d'actionnement (18), le véhicule (10) s'arrête, et une action manuelle du frein par l'intermédiaire de la pédale de frein est autorisée à tout moment et de préférence, les montées et les descentes sont compensées dans leur action sur le véhicule (10).

10. Procédé selon l'une quelconque des revendications 6 à 9,
**caractérisé en ce que**
l'installation de régulation (14), après activation des champs de caractéristiques, enregistrés en mémoire, sont utilisés pour générer la vitesse de consigne momentanée (v) en fonction de la position de l'installation d'actionnement (18) et la distance (d) par rapport à l'objet le plus proche dans la direction de déplacement.
